(19) Europäisches Patentamt
European Patent Office
Office européen des brevets

(11) Numéro de publication: **0 354 077 A1**

(12) # DEMANDE DE BREVET EUROPEEN

(21) Numéro de dépôt: **89401889.4**

(22) Date de dépôt: **30.06.89**

(51) Int. Cl.5: **G 02 F 1/35**
C 09 K 19/12

(30) Priorité: **29.07.88 FR 8810259**

(43) Date de publication de la demande:
**07.02.90 Bulletin 90/06**

(84) Etats contractants désignés: **DE FR GB NL**

(71) Demandeur: **THOMSON-CSF**
**51, Esplanade du Général de Gaulle**
**F-92800 Puteaux (FR)**

(72) Inventeur: **Robin, Philippe**
**THOMSON-CSF SCPI Cédex 67**
**F-92045 Paris la Défense (FR)**

**Tournilhac, François**
**THOMSON-CSF SCPI Cédex 67**
**F-92045 Paris la Défense (FR)**

(74) Mandataire: **Guérin, Michel et al**
**THOMSON-CSF SCPI**
**F-92045 PARIS LA DEFENSE CEDEX 67 (FR)**

(54) **Cristaux liquides non-centrosymétriques utilisables en optique non linéaire.**

(57) L'invention a pour objet un cristal liquide non-centrosymétrique utilisable en optique non linéaire, le cristal liquide étant constitué de molécules composées de la manière suivante : groupement accepteur d'électrons - système à électrons délocalisés - groupement donneur d'électrons. Chacune des molécules comprend quatre tronçons s'intégrant dans la molécule :
- deux tronçons (2, 2') dits de type II, situés aux extrémités de la molécule, et de nature chimique semblable,
- deux tronçons centraux (1,3), l'un dit de type I et l'autre dit de type III,
la nature chimique des tronçons de types I, II et III est telle que ces tronçons sont deux à deux incompatibles et ont tendance à la ségrégation, le tronçon de type III étant une unité rigide polaire et/ou polarisable.

Application aux dispositifs d'optique non linéaire.

FIG.1

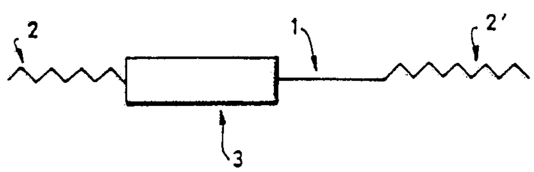


EP 0 354 077 A1

**Description**

**CRISTAUX LIQUIDES NON-CENTROSYMETRIQUES UTILISABLES EN OPTIQUE NON LINEAIRE**

La présente invention concerne une nouvelle famille de cristaux liquides présentant un arrangement non-centrosymétrique. L'invention concerne également des dispositifs utilisant ces cristaux liquides, notamment pour des applications en optique non linéaire.

Certains matériaux organiques possèdent des propriétés d'optique non-linéaire très importantes ce qui leur permet de concurrencer et même de supplanter, dans ce domaine, les matériaux inorganique. Ces propriétés d'optique non-linéaire sont en particulier celles d'ordre 2 qui permettent la fabrication de doubleurs de fréquence ou de modulateurs élastrooptiques.

Deux conditions doivent être remplies pour obtenir un matériau possédant ces propriétés :
- les molécules constituant ce matériau doivent être hyperpolarisables et non-centrosymétriques,
- l'organisation de l'ensemble des molécules doit être non-centrosymétrique.

Les molécules retenues sont le plus souvent de la forme suivante : groupement accepteur d'électrons (A) -système à électrons délocalisés (ou polarisables) - groupement donneur d'électrons (D). Ces molécules possèdent un dipôle électrique dû au déplacement des électrons du groupement donneur vers le groupement accepteur.

Plusieurs procédés existent pour assembler ces molécules en un édifice non-centrosymétrique : la cristallogénèse, les films de Langmuir-Blodgett, les polymères dopés, les cristaux liquides smectiques C chiraux ferro électriques.

La cristallogénèse permet l'obtention d'un matériau très dense mais qui est souvent inutilisable, car les molécules ont tendance à s'orienter tête-bêche afin de minimiser l'interaction de leurs dipôles.

La méthode de Langmuir-Blodgett, délicate à mettre en oeuvre, permet la fabrication de films minces ultra-orientés. Des couches de plusieurs micromètres d'épaisseur sont longues à obtenir.

Dans les polymères dopés, les molécules actives en optique non-linéaire sont incluses dans une matrice dont le rôle est de figer l'orientation de ces molécules après l'application d'un champ électrique. Ce procédé de mélange utilise peu de molécules actives par rapport à la matrice polymère inactive (de l'ordre de 10 %). De plus, les taux d'orientation sont toujours faibles à cause du mouvement non coopératif des molécules qui ne sont pas en interaction les unes par rapport aux autres.

Les cristaux liquides smectiques C chiraux ferroélectriques possèdent des structures non-centrosymétriques adressables par un champ électrique. Cependant, l'axe d'hyperpolarisabilité d'une molécule d'un tel cristal liquide est orthogonal à l'axe polaire de l'arrangement smectique C chiral de sorte que cet axe devient un axe de symétrie par rapport à la partie active de la molécule.

Afin de pallier ces inconvénients, l'invention propose une nouvelle famille de molécules formant spontanément des structures non-centrosymétriques et dont l'axe polaire est colinéaire à l'axe d'hyperpolarisabilité de la molécule. L'arrangement non-centrosymétrique est obtenu grâce au principe de la ségrégation de phase de chacun des constituants de la molécule.

L'invention a donc pour objet un cristal liquide non-centrosymétrique utilisable en optique non linéaire, le cristal liquide étant constitué de molécules composées de la manière suivante : groupement accepteur d'électrons - système à électrons délocalisés - groupement donneur d'électrons, caractérisé en ce que chacune des molécules comprend quatre tronçons s'intégrant dans la molécule :
- deux tronçons dits de type II, situés aux extrémités de la molécule, et de nature chimique semblable,
- deux tronçons centraux, l'un dit de type I et l'autre dit de type III,

la nature chimique des tronçons de types I, II et III est telle que ces tronçons sont deux à deux incompatibles et ont tendance à la ségrégation, le tronçon de type III étant une unité rigide polaire et/ou polarisable.

L'invention a aussi pour objet une cellule à cristal liquide constituée de deux lames placées en vis-à-vis, supportant des électrodes sur leur face interne et insérant une couche de cristal liquide, caractérisée en ce que ladite couche est un cristal liquide non-centrosymétrique tel que défini ci-dessus.

L'invention sera mieux comprise et d'autres avantages apparaîtront grâce à la description qui va suivre, donnée à titre non limitatif, en relation avec les figures annexées parmi lesquelles :

- la figure 1 est un schéma représentant la structure d'une molécule selon l'invention,
- les figures 2 et 3 représentent des arrangements impossibles à obtenir entre deux molécules selon l'invention,
- la figure 4 représente l'arrangement possible pour des molécules selon l'invention,
- la figure 5 représente la formule chimique d'une molécule selon l'invention,
- la figure 6 représente le schéma de synthèse d'une molécule selon l'invention,
- la figure 7 illustre une cellule électrooptique utilisant un cristal liquide selon l'invention,
- la figure 8 illustre le fonctionnement d'un doubleur de fréquence utilisant un cristal liquide selon l'invention,
- la figure 9 illustre le fonctionnement d'un modulateur électrooptique utilisant un cristal liquide selon l'invention,
- les figures 10 et 11 illustrent le fonctionnement d'une cellule à orientation planaire et utilisant un cristal liquide selon l'invention.

Les cristaux liquides selon l'invention sont formés de molécules telles que celle qui est schématisée à la

figure 1 et qui comprend quatre tronçons 1, 2, 2′ et 3.

Cette molécule comprend quatre tronçons liés de façon covalente. Les tronçons 2 et 2′ situés aux extrémités sont de nature chimique semblable (type II) alors que les tronçons centraux 1 et 3 sont de natures différentes (respectivement de type I et de type III). La nature chimique des tronçons I, II et III est telle que ceux-ci sont deux à deux incompatibles et ont tendance à la ségrégation. Afin de satisfaire les affinités de toutes les parties constitutives des molécules, celles-ci s'ordonnent en lamelles de structures non-centrosymétriques. Ainsi à l'intérieur d'une lamelle toutes les molécules sont dans le même sens.

Le tronçon de type III est une unité rigide polaire ou/et polarisable.

Les figures 2 et 3 représentent deux sortes d'arrangements centrosymétriques qui ne peuvent pas se réaliser avec les molécules selon l'invention. En effet, si des molécules se présentaient de la sorte, des forces répulsives, symbolisées par des doubles flèches, exerceraient leurs actions pour modifier cet arrangement. La ségrégation de différentes parties des molécules favorise un arrangement non-centrosymétrique du type de la figure 4.

Chaque molécule étant dipolaire, l'ordre ferroélectrique, qui règne à l'intérieur de chaque lamelle crée un champ électrique favorisant une orientation de même sens dans les lamelles adjacentes. L'influence des affinités chimiques inter-lamelles sur l'orientation interlamellaire est nulle car les deux extrémités des molécules sont du même type (type II).

Dans le matériau ainsi constitué, toutes les molécules sont dans le même sens et l'axe polaire et parallèle au grand axe moléculaire.

Afin d'obtenir des propriétés d'hyperpolarisabilité satisfaisantes, l'un des tronçons centraux est un système conjugué rigide (électrons polarisables). L'agencement de la molécule est telle que les autres tronçons y sont inclus de façon que le système conjugué se trouve porteur à ses extrémités de groupements donneur et accepteur d'électrons. Par ce moyen, on obtient l'axe d'hyperpolarisabilité moléculaire parallèle à l'axe polaire du matériau. Il s'en suit une valeur importante du coefficient de susceptibilité quadratique $\chi^{(2)}$ dirigé suivant cet axe.

Les molécules selon l'invention permettent donc la fabrication d'un matériau organique à structure non-centrosymétrique dans lequel toutes les molécules sont actives. De plus, les phases formées étant des cristaux liquides, il est possible de commander leur orientation par un champ électrique ou magnétique.

La suite de la description décrira la synthèse d'une molécule de cette famille et son utilisation dans plusieurs dispositifs d'optique non-linéaire.

Exemple 1

Cet exemple porte sur une molécule mésogène dont les tronçons permettant la ségrégation sont les groupements chimiques suivants :

- tronçon de type I : alkyl $(CH_2)_n$
- tronçon de type II : perfluoroalkyl $(CF_2)_n$
- tronçon de type III : biphényl $(C_6H_4)_2$.

Les propriétés d'hyperpolarisabilité sont obtenues grâce aux groupements chimiques suivants :

- groupement donneur : éther - OR
- groupement accepteur : ester 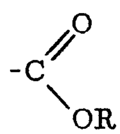
- système conjugué : biphényl.

La figure 5 représente cette molécule mésogène en détaillant les différentes fonctions de ses parties constitutives. On reconnaît : le tronçon 1 $(CH_2)_{11}$ qui est de type I, le tronçon 2 $(CF_2)_7$ qui est de type II, le tronçon 2′ $(CF_2)_8$ qui est également de type II et le tronçon 3 biphényl qui est de type III. Le système conjugué est constitué par le biphényl. La partie de la molécule située à gauche du biphényl constitue l'élément accepteur d'électrons, tandis que la partie située à droite du biphényl constitue l'élément donneur d'électrons.

Cette molécule a été synthétisée selon le schéma synoptique représenté à la figure 6. L'iodure de perfluorooctyl (a) réagit avec le 10- undécénol (b) en présence d'azobisisobutyronitrile (AIBN) pour donner le produit (c) (point de fusion 46° C, rendement 75 %). Le produit (c) est réduit par le zinc en milieu acide, ce qui donne un produit (d) pour lequel X = OH (point de fusion 79° C, rendement 80 %). Le dérivé bromé correspondant, c'est-à-dire pour X = Br (point de fusion 38° C, rendement 85 %), est obtenu par réaction avec un mélange d'acide bromhydrique et d'acide sulfurique à 130° C. Le couplage du dérivé bromé avec le 4 cyano-4′-hydroxybiphényl en présence de $K_2CO_3$ dans le diméthylformamide (DMF) donne le produit (e) pour lequel Y = CN (point de fusion 142° C, rendement 80 %). Ce dernier est hydrolysé en deux étapes en l'acide correspondant par traitement avec $H_2O_2$/KOM ce qui donne un amide : le produit (e) pour lequel Y = $CONH_2$ (point de fusion 224° C). Ce produit est à son tour traité par AcOH/HCl pour donner le produit (e) pour lequel Y = $CO_2H$ (rendement global 90 %). Le chlorure d'acyl correspondant est formé avec $SOCl_2$ et directement condensé avec le 1H, 1H-perfluoroctanol pour donner le produit (e) pour lequel (avec un rendement de 75 %) Y = $CO_2CH_2(CF_2)_7F$.

La structure chimique de chacun des produits ci-dessus a été confirmée par analyse élémentaire

quantitative et spectroscopie (par infrarouge, résonance magnétique nucléaire, ultraviolet). Les résultats sont dans tous les cas conformes aux prédictions. Le comportement mésomorphe a été étudié par analyse différentielle, observation microscopique en lumière polarisée et diffraction des rayons X. Les résultats permettent d'établir que la phase mésomorphe stable entre 92°C et 111°C est une phase smectique C monocouche ayant une distance interlamellaire de 36,5 angströms.

Les différentes étapes de la réalisation pratique de celle molécule mésogène peuvent être effectuées de la manière suivante :

1) obtention de $F-(CF_2)_8-CH_2-CHI-(CH_2)_9-OH$.

3,4 g (20 mmol) de 10-undécénol et 10,9 g (20 mmol) d'iodure de perfluorooctyl sont dissous dans 15 ml d'heptane sec. On porte au reflux avec agitation et bullage d'azote. La réaction est contrôlée sur plaques analytiques (Kieselgel, $CHCl_3$, UV 254 mm). Après disparition complète du produit de départ, le mélange est maintenu une heure au reflux puis l'heptane est évaporé et le résidu filtré sur 50 g de silice (63-200 µm) avec comme éluant le dichlorométhane puis l'éther. Le produit est ensuite recristallisé dans l'acétonitrile au réfrigérateur.

2) Obtention de $F-(CF_2)_8-(CH_2)_{11}-OH$.

Dans un tricol de deux litres équipé d'une entrée de gaz avec bullage, d'un réfrigérant et d'un agitateur magnétique, on met en solution 11,5 g (16 mmol) du produit obtenu à l'étape précédente (le produit (c) de la figure 6) dans 300 ml de n-propanol redistillé et 400 ml d'isooctane. Cette solution est chauffée dans un bain d'huile à 110°C et un bullage lent de HCl est établi. On ajoute avec précaution entre 3 et 6 g de poudre de zinc. Après deux heures, le zinc solide a disparu et l'analyse sur plaque (Kieselgel, $CH_2Cl_2 + CH_3OH$ (95:5), UV 254 nm) montre la disparition du produit (c).

La solution est refroidie, filtrée sur papier et évaporée. Le résidu huileux est versé dans de l'eau froide et ainsi maintenu à 0-5°C durant 30 mn. Le précipité blanc est lavé à l'eau, redissous dans de l'acétone et séché sur sulfate de magnésium. Le solide obtenu après évaporation est utilisé tel quel dans l'étape suivante.

3) Obtention de $F-(CF_2)_8 - (CH_2)_{11} - Br$.

14 g d'acide sulfurique concentré sont précautionneusement versés dans 42 g d'acide bromhydrique à 47 %. 8,3 g (14 mmol) du produit obtenu précédemment sont ajoutés et le mélange est chauffé à 130-140°C sans agitation pendant trois heures. Après refroidissement, le mélange est versé dans 100 ml d'eau froide. La phase aqueuse est extraite au dichlorométhane. La phase organique est lavée avec de l'acide sulfurique, puis deux fois à l'eau, une fois avec une solution de thiosulfate de sodium et une fois à l'eau puis filtrée sur silice dans un entonnoir filtrant. Le solide jaune clair obtenu après évaporation peut être utilisé tel quel. Son point de fusion ne varie pas après recristallisation dans l'acétonitrile.

4) Obtention de $F-(CF_2)_8\ (CH_2)_{11}-O-(C_6H_4)_2-C$

52 mg (270 µmol) de 4-cyano-4'-hydroxybiphényl, 360 mg de $K_2CO_3$ et 15 ml de diméthylformamide sec sont mélangés sous azote avec agitation. 175 g (270 µmol) du produit obtenu précédemment, sont ajoutés et le mélange est chauffé à 120°C pendant 8 heures puis refroidi doucement et le produit cristallise. 20 ml d'eau froide sont alors ajoutés avec agitation. Le solide est récupéré sur un verre fritté, lavé à l'eau et séché sous vide puis redissous dans du dichlorométhane et purifié par chromatographie préparative à 1,2 MPa sur 50 g de Kieselgel 15-40 µm avec comme éluant : éther de pétrole + dichlorométhane (1:1).

5) Obtention de $F-(CF_2)_8-(CH_2)_{11}-O-(C_6H_4)_2-CONH_2$

250 mg (330 µmol) du produit obtenu précédemment sont fondus avec une goutte d'Aliquat 336 (Chlorure de trioctylméthyl-ammonium) à l'aide d'un mortier étuvé à 100°C. Le mortier est alors refroidi jusqu'à température ambiante. On ajoute 1 ml d'eau oxygénée à 135 volumes et 1,17 g de potasse en pastilles que l'on mélange avec le pilon : une réaction vigoureuse a lieu et la viscosité augmente. Le mortier est alors placé à l'étuve à 100°C durant une heure et le mélange réactionnel est broyé de temps à autre durant ce temps. Après refroidissement, on ajoute quelques ml d'eau. Le solide est récupéré sur verre fritté, lavé à l'eau distillée et séché sous vide.

6) Obtention de $F-(CF_2)_8-(CH_2)_{11}-O-(C_6H_4)_2-COOH$

L'amide obtenu précédemment est dissous dans 70 ml d'acide acétique bouillant et placé dans un tricol de 500 ml équipé d'une entrée de gaz avec bullage, d'un agitateur magnétique, d'un réfrigérant et d'une ampoule d'addition. La solution est maintenue au reflux par un bain d'huile et 16 ml d'acide chlorhydrique 12 N sont lentement ajoutés. Un bullage lent de HCl est maintenu durant cinq heures et le reflux prolongé encore douze heures après addition. Pendant cette réaction, il peut être nécessaire de rajouter de l'acide acétique pour éviter la précipitation. Le solvant est évaporé à sec et le solide recristallisé dans 200 ml d'acétone après filtration à chaud.

7) Obtention de $F-(CF_2)_8-(CH_2)_{11}-O-(C_6H_4)_2-CO_2-CH_2-(CF_2)_7-F$

100 mg (127 µmol) du produit obtenu précédemment sont traités durant 2,5 h. par 8 ml de $SOCl_2$ au reflux sous atmosphère d'azote. Le chlorure de thionyle est alors évaporé par distillation. Du toluène sec (10 ml) est ajouté et la distillation est poursuivie jusqu'à ce que la température atteigne 110°C en haut de la colonne. La colonne est remplacée par un réfrigérant et l'on ajoute : 1 ml de pyridine, 10 ml de toluène sec suivis de 130 mg (325 µmol) de 1 H, 1H-perfluorooctanol. Le mélange est maintenu durant douze heures à 110°C. Ensuite, les produits volatils sont évacués par distillation, 10 ml de toluène sont ajoutés, et à nouveau distillés et le résidu est dégazé sous vide. Le solide est ensuite dissous dans $CH_2Cl_2$ et filtré sur 50 mg de Kieselgel 15-40 µm avec comme éluant : éther de pétrole + $CH_2Cl_2$ (3:1). Le produit est recristallisé dans l'heptane.

Les expériences de diffraction des rayons X ont montré que le produit présente, comme prévu, une phase smectique C entre 92°C et 111°C.

Exemple 2

D'autres produits mésogènes, conformes au schéma de la figure 1, peuvent être synthétisés et comprendre les tronçons suivants qui permettent la ségrégation :
- tronçons alkyls : $(CH_2)_n$
- tronçons perfluorés : $(CH_2)_n$
- tronçons PVDF : $(CH_2-CF_2)_n$
- tronçons polyéthylène oxyde : $(CH_2-CH_2O)_n$
- tronçons polypropylène oxyde : $[CH_2-CH(CH_3)O]_n$
- tronçons polysiloxane : $(R_2SiO)_n$

R étant par exemple un radical alkyle.

Exemple 3

Le tronçon de type III (unité rigide polaire ou/et polarisable) peut être choisi parmi les :
- dérivés mono ou bicycliques aliphatiques
- dérivés aromatiques substitués
- dérivés hétérocycliques
- dérivés perfluoroaromatiques.

Exemple 4

Les groupements accepteurs d'électrons peuvent être les suivants :
- groupements acyls -COOR
- groupements cétones -COR
- groupements nitriles -CN
- groupements nitro $-NO_2$
- groupements aldéhydes -CHO
- groupements pyridine N-oxyde-$(C_5H_3N^{\oplus})O$
- groupements pyridinium $-(C_5H_3N^{\oplus})R$

R étant par exemple un radical alkyle.

Exemple 5

Les groupements donneurs d'électrons peuvent être les suivants :
- groupements éthers -OR
- groupements amines -NRR′
- groupements phénates $-O^{\ominus}$
- groupements halogènes : -F, -Cl, -Br, -I

R et R′ étant par exemple des radicaux alkyles.

Exemple 6

Cet exemple concerne l'obtention d'une cellule à orientation homéotrope.

Dans une cellule à orientation homéotrope, les molécules sont approximativement perpendiculaires à la surface de la cellule. Il y a deux états stables $\vec{P}$ et $-\vec{P}$ actifs en optique non linéaire.

La figure 7 représente, en coupe, la disposition d'une telle cellule. Cette cellule comprend deux lames de verre 11 et 12 se faisant face et séparées d'une distance de l'ordre de 10 µ. Chaque face interne des lames 11 et 12 est recouverte d'une électrode, respectivement 13 et 14. Les électrodes 13 et 14 peuvent avantageusement être réalisées par des dépôts d'oxyde mixte d'étain et d'indium (électrodes ITO). Sur les électrodes 13 et 14 ont été déposées des couches d'ancrage homéotrope, respectivement référencées 15 et 16. Ces couches sont par exemple formées par un polysiloxane fluoré. Une couche monomoléculaire d'acide gras fluoré, déposée par la méthode de Langmuir-Blodgett, induit également une orientation homéotrope. Le cristal liquide constitué par les molécules selon l'invention est ensuite introduit à l'intérieur de la cellule formée par les deux lames de verre ainsi traitées. Les molécules constitutives du cristal liquide sont disposées de la façon représentée à la figure 4.

L'état de polarisation de cette cellule étant stable elle constituera par exemple, un doubleur de fréquence ou un modulateur électrooptique.

La figure 8 illustre le fonctionnement d'un doubleur de fréquence constitué par le cristal liquide selon l'invention disposé entre des lames 21 et 22. L'état de polarisation des molécules est représenté par les petites flèches dessinées entre les électrodes. Une onde électromagnétique I de pulsation ω traversant la cellule selon une direction parallèle aux lames 21 et 22 ressort de la cellule avec une pulsation 2 ω.

La figure 9 illustre le fonctionnement d'un modulateur électrooptique constitué par le cristal liquide selon l'invention disposé entre des lames 31 et 32 recouvertes d'électrodes sur leurs faces internes. L'état de polarisation des molécules est représenté également par les petites flèches dessinées entre les électrodes. Une tension V est appliquée aux bornes des électrodes. Une onde électromagnétique $I = I_0 \sin\omega t$ traversant la cellule selon une direction parallèle aux lames 31 et 32 peut devenir $I' - I_0 \sin(\omega t + \varphi)$ en sortant de la cellule, avec $\varphi = k.V$ (k étant un coefficient de proportionnalité).

Exemple 7

Cet exemple concerne l'obtention d'une cellule à orientation planaire.

Cette configuration conduit à une cellule monostable. L'état de repos (sans champ électrique) est inactif en optique non-linéaire. La configuration devient active lorsqu'on applique une tension continue aux bornes de la cellule.

Les figures 10 et 11 illustrent le fonctionnement d'une telle cellule, respectivement sans tension appliquée et avec une tension continue appliquée.

Les lames de verres 41 et 42 sont recouvertes de couches 43 et 44 d'oxyde conducteur transparent (ITO). Une couche d'orientation 45 et 46 planaire est ensuite déposée sur l'ITO. Il peut s'agir d'un polyimide par exemple.

En l'absence de champ électrique appliqué sur la cellule, (E = 0) toutes les molécules s'orientent parallèlement à la surface. Une structure en domaine apparaît car aucune orientation n'est privilégiée. La cellule est alors centrosymétrique et donc inactive en optique non linéaire (figure 10).

Lorsqu'un champ électrique est appliqué ($E = E_0$), les molécules s'orientent dans le sens du champ électrique. La nature des interactions intermoléculaires décrites plus haut fait qu'il s'agit d'un mouvement d'ensemble et non pas d'une somme de mouvements de molécules individuelles non corrélées les unes aux autres (figure 11). Toutes les molécules étant dans le même sens la cellule est non centrosymétrique et donc active en optique non-linéaire.

Une telle cellule à deux états, l'un actif et l'autre inactif, pourra conduire à fabriquer les doubleurs de fréquence adressables par champ électrique. Les systèmes d'adressage mis au point pour les écrans à cristaux liquides sont ici parfaitement utilisables.

## Revendications

1 - Cristal liquide non-centrosymétrique utilisable en optique non linéaire, le cristal liquide étant constitué de molécules composées de la manière suivante : groupement accepteur d'électrons - système à électrons délocalisés -groupement donneur d'électrons, caractérisé en ce que chacune des molécules comprend quatre tronçons s'intégrant dans la molécule :
- deux tronçons (2, 2') dits de type II, situés aux extrémités de la molécule, et de nature chimique semblable,
- deux tronçons centraux (1,3), l'un dit de type I et l'autre dit de type III,

la nature chimique des tronçons de types I, II et III est telle que ces tronçons sont deux à deux incompatibles et ont tendance à la ségrégation, le tronçon de type III étant une unité rigide polaire et/ou polarisable.

2 - Cristal liquide selon la revendication 1 caractérisé en ce que les tronçons permettant la ségrégation peuvent être choisis parmi les suivants :
- tronçons alkyls $(CH_2)_n$
- tronçons perfluorés $(CF_2)_n$
- tronçons polyfluorure de vinylidène $(CH_2\text{-}CF_2)_n$
- tronçons polyéthylène oxyde $(CH_2\text{-}CH_2O)_n$
- tronçons polypropylène oxyde$[CH_2\text{-}CH(CH_3)O]_n$
- tronçons polysiloxanes $(R_2SiO)_n$

R étant un radical alkyle.

3 - Cristal liquide selon l'une des revendications 1 ou 2, caractérisé en ce que le tronçon de type III est choisi parmi :
- les dérivés mono ou bicycliques aliphatiques,
- les dérivés aromatiques substitués,
- les dérivés hétérocycliques,
- les dérivés perfluoroaromatiques.

4 - Cristal liquide selon l'une quelconque des revendications 1 à 3, caractérisé en ce que le groupement accepteur d'électrons est choisi parmi :
- les groupements acyls -COOR
- les groupements cétones -COR

- les groupements nitriles -CN
- les groupements nitro $-NO_2$
- les groupements aldéhydes -CHO
- les groupements pyridine N-oxyde-$(C_5H_3N^{\oplus})O$
- les groupements pyridinium -$(C_5H_3N^{\oplus})R$

R étant un radical alkyle.

5 - Cristal liquide selon l'une quelconque des revendications 1 à 4, caractérisé en ce que le groupement donneur d'électrons est choisi parmi :

- les groupements éthers -OR
- les groupements amines -NRR'
- les groupements phénates $-O^{\ominus}$
- les groupements halogènes

R et R' étant des radicaux alkyles.

6 - Cristal liquide selon la revendication 1, caractérisé en ce que :

- le tronçon de type I est un alkyl $(CH_2)_n$,
- les tronçons de type II sont des perfluoroalkyls $(CF_2)_n$,
- le tronçon de type III est un biphényl $(C_6H_4)_2$,
- le groupement donneur d'électrons étant un éther OR,
- le groupement accepteur étant un ester

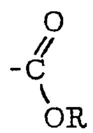

- le système à électrons délocalisés étant le biphényl.

FIG.1

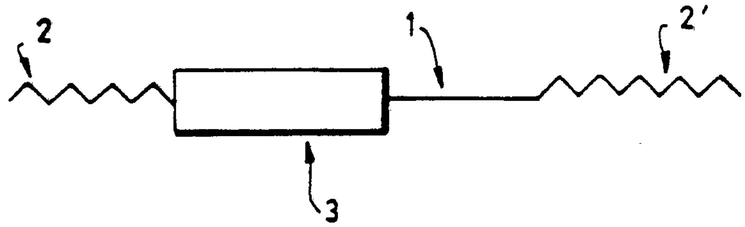


FIG.2

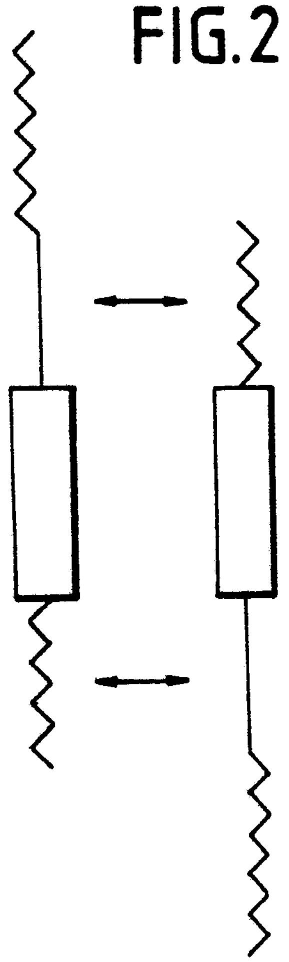

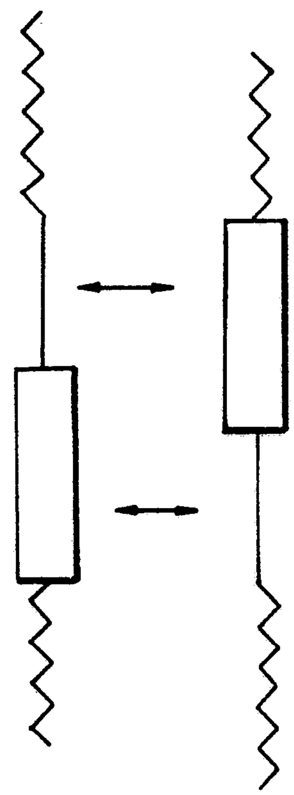

FIG.3

FIG.4

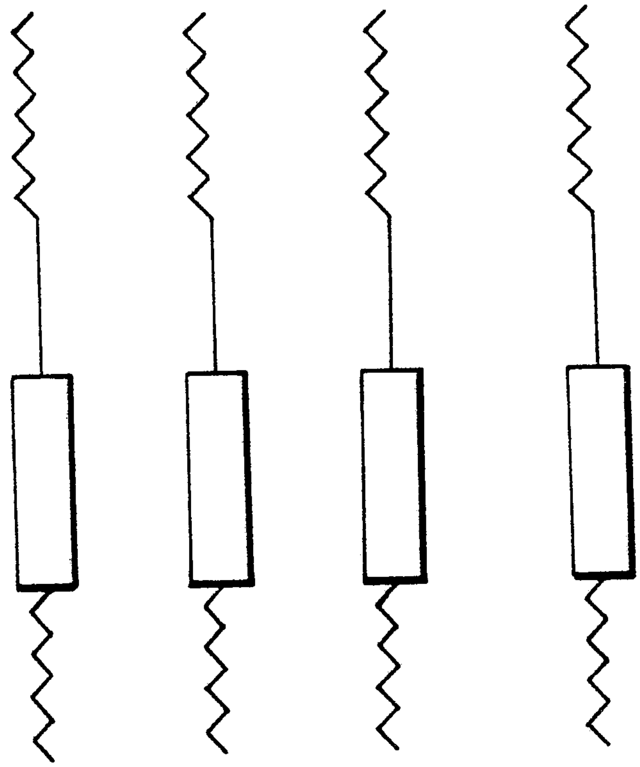

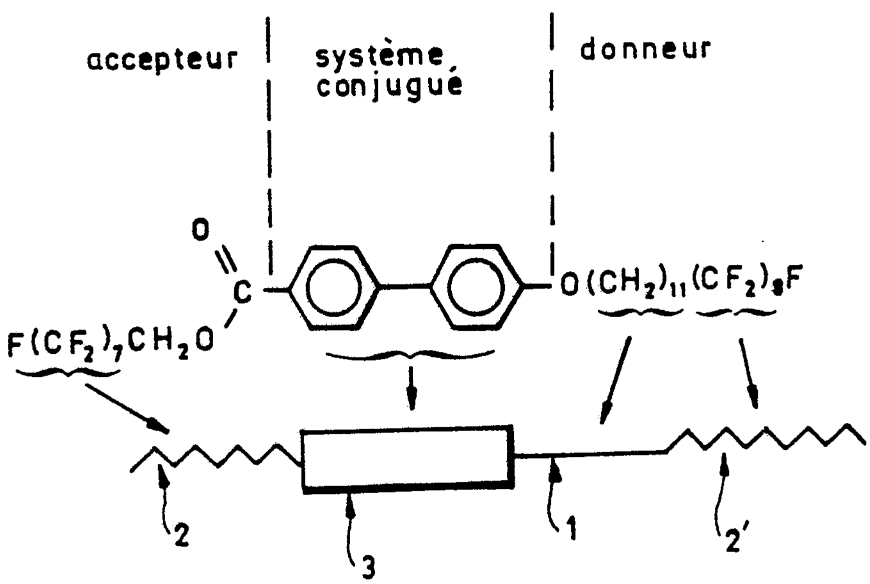


FIG. 5

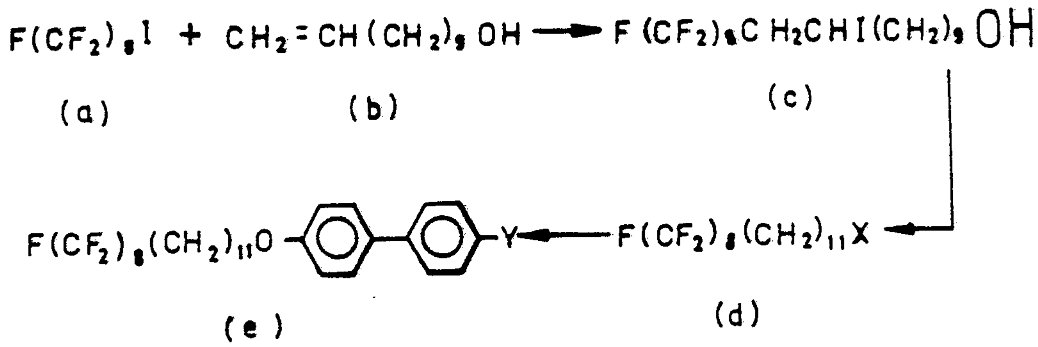

(a) (b) (c) (d) (e)

FIG. 6

FIG. 7

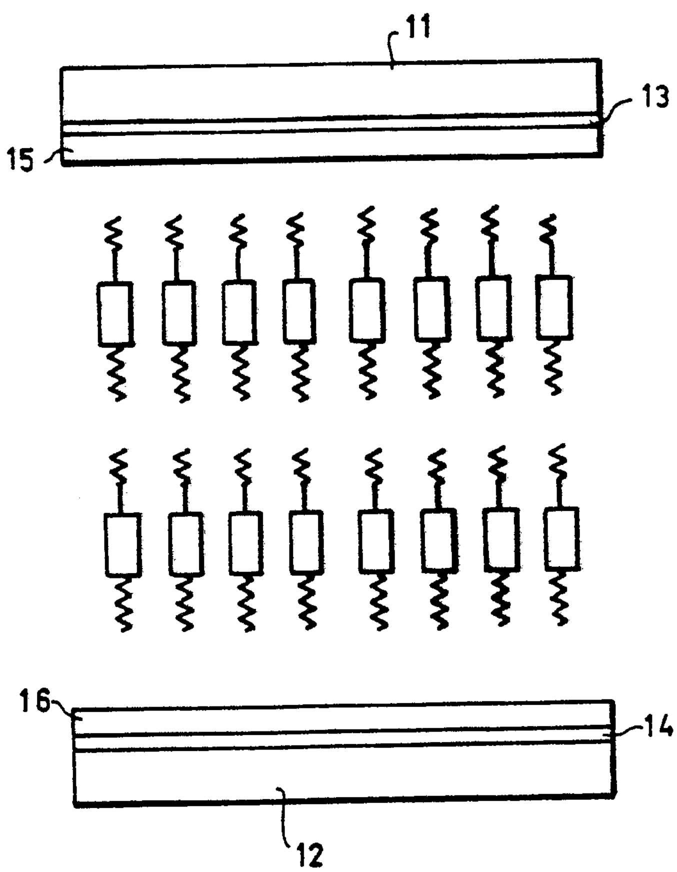

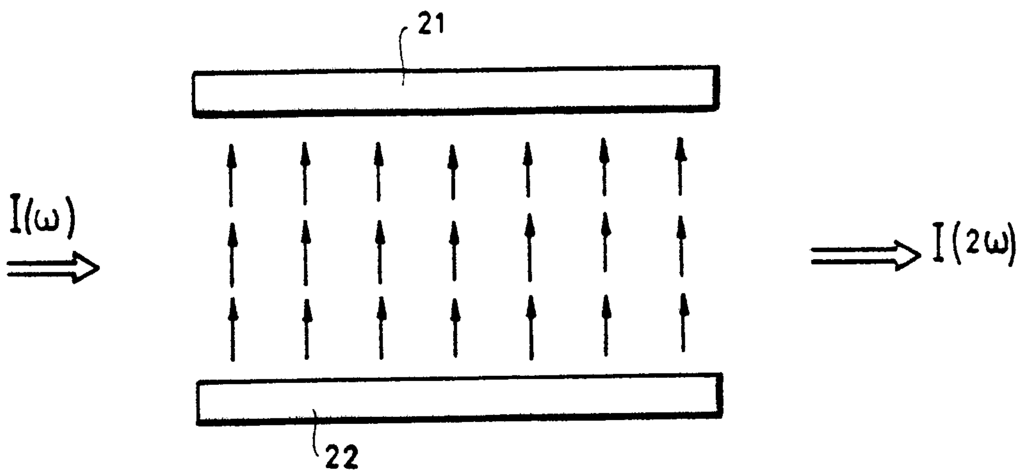


FIG. 8

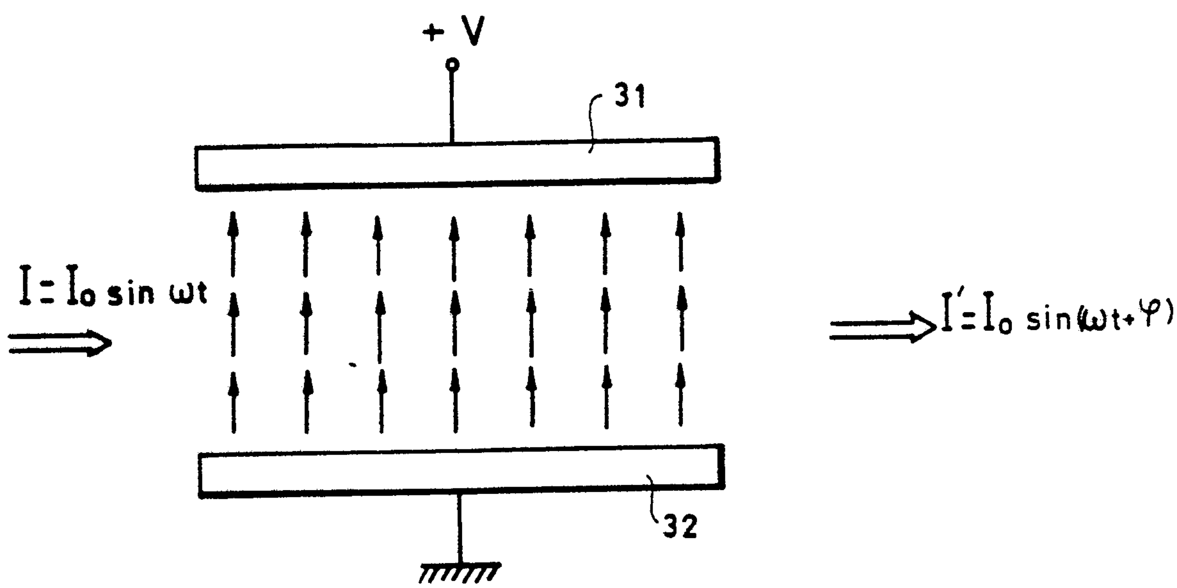


FIG. 9

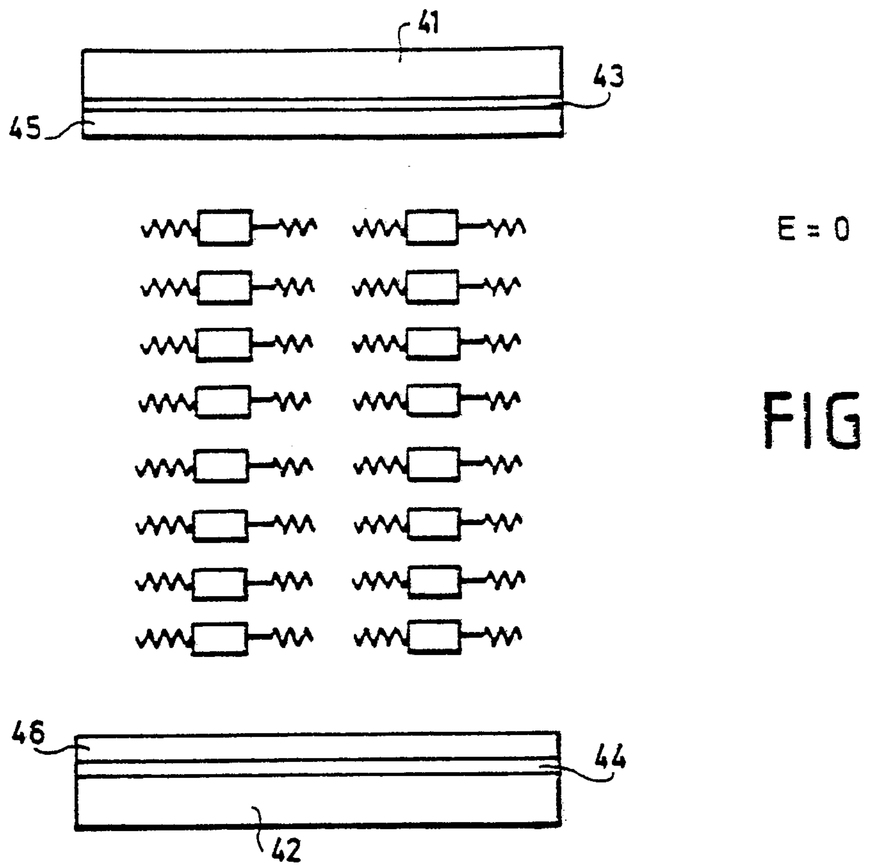


FIG.10

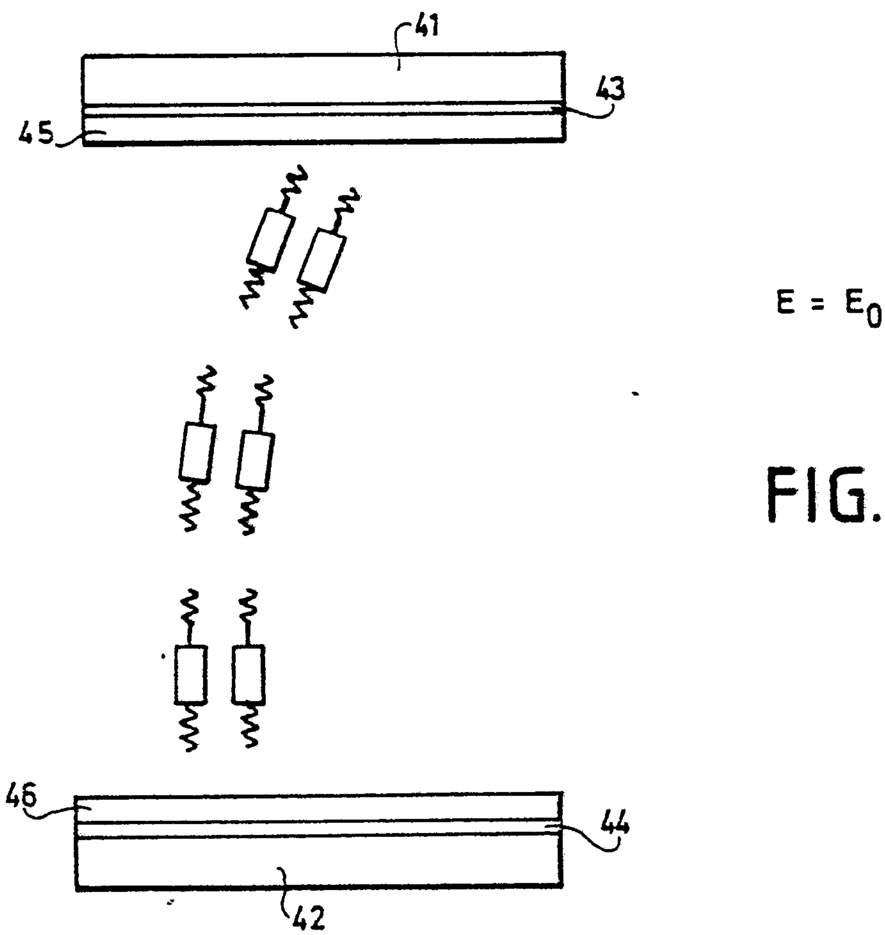


FIG.11

European Patent Office

# EUROPEAN SEARCH REPORT

Application Number

EP 89 40 1889

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | NONLINEAR ORGANIC MATERIALS, vol. 4, no. 6, juin 1987, pages 945-949, Optical Society of America, US: G. BERKOVIC et al.: "Second-order nonlinear polarizability of various biphenyl derivatives" * Chapitre: "Experiment" * ----- | 1 | G 02 F 1/35<br>C 09 K 19/12 |
| | | | **TECHNICAL FIELDS SEARCHED (Int. Cl.5)** |
| | | | G 02 F 1/00<br>C 09 K 19/00 |

The present search report has been drawn up for all claims

| Place of search | Date of completion of the search | Examiner |
|---|---|---|
| THE HAGUE | 06-11-1989 | DIOT P.M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document